# EUROPÄISCHE PATENTSCHRIFT

(11) **EP 1 182 104 B1**
(45) Veröffentlichungstag und Bekanntmachung des Hinweises auf die Patenterteilung: **26.01.2005**
(21) Anmeldenummer: 01202995.5
(22) Anmeldetag: 08.08.2001
(51) Int. Cl.: B60R 25/02

(54) **Vorrichtung zur Verriegelung der Lenkspindel eines Fahrzeuges**
Device for locking a vehicle steering column
Dispositif de verrouillage pour la colonne de direction d'un véhicule

(30) Priorität: 26.08.2000 DE 10041984
(43) Veröffentlichungstag der Anmeldung: 27.02.2002
(60) Teilanmeldung: 04011122.1
(73) Patentinhaber: Valeo Sicherheitssysteme GmbH, 85253 Erdweg (DE)
(72) Erfinder: Frick, Alexander, 86153 Augsburg (DE); Pieh, Mario, 97340 Marktbreit (DE); Rocheteau, Etienne, 85253 Grossberghofen (DE); Starken, Harald, 85253 Walkertshofen (DE); Lieb, Kurt, 63500 Seligenstadt (DE)
(74) Vertreter: Podszus, Burghart, Dipl.-Phys., Dipl.-Wirtsch.-Ing.

(56) Entgegenhaltungen:
- EP-A- 0 952 051
- EP-A- 0 989 038
- DE-C- 3 611 483
- GB-A- 2 257 676

## Beschreibung

Die Erfindung betrifft eine Vorrichtung zur Verriegelung der Lenkspindel einer Lenkeinrichtung eines Fahrzeuges mit einem in einem Gehäuse angeordneten und von einer Ent- in eine Verriegelungsstellung und umgekehrt verschiebbaren Sperrbolzen.

Die GB-A-2 257 676 zeigt eine Vorrichtung zur Verriegelung der Lenkspindel einer Lenkeinrichtung eines Fahrzeuges mit einem in einem Gehäuse angeordneten und von einer Ent- in eine Verriegelungsstellung und umgekehrt verschiebbaren Sperrbolzen, mit den Merkmalen:
a) die Vorrichtung umfaßt auf ihrer der Lenkspindel zugewandten Seite ein Führungsteil mit einer an den Sperrbolzen formschlüssig angepaßten Führungsausnehmung, in welcher der vordere Teil des Sperrbolzens (6) verschiebbar gelagert ist;
b) in dem Führungsteil ist eine erste Ausnehmung vorgesehen, die über eine erste Öffnung in die Führungsausnehmung mündet;
c) in dem Sperrbolzen befindet sich eine Ausnehmung), die in der Verriegelungsstellung des Sperrbolzens der ersten Öffnung der ersten Ausnehmung des Führungsteiles gegenüberliegt;
d) in der ersten Ausnehmungdes Führungsteiles ist ein federbeaufschlagtes Sicherungselement angeordnet;
e) es ist ein Verschlußelement vorgesehen, das das Sicherungselement festhält und in einer zweiten Ausnehmung senkrecht zur ersten Ausnehmung verschiebbar ist, so daß in der Verriegelungsstellung des Sperrbolzens bei Entfernen des Gehäusebereiches, an dem das Verschlußelement anliegt, das Sicherungselement durch die auf das Sicherungselement ausgeübte Federkraft in die Ausnehmung des Sperrbolzen geschoben wird und den Sperrbolzen in seiner Verriegelungsstellung sichert.

Eine ähnliche Vorrichtung ist beispielsweise aus der DE 197 13 318 C1 bekannt. Bei dieser bekannten Vorrichtung setzt sich das Gehäuse der Vorrichtung aus zwei das Mantelrohr der Lenkspindel umschließenden Gehäuseteile zusammen, wobei das eine Gehäuseteil unlösbar mit dem Mantelrohr und das zweite Gehäuseteil mit dem ersten Gehäuseteil lösbar verbunden ist. Um zu vermeiden, daß ein unbefugter Dritter in der Verriegelungsstellung des Sperrbolzens das zweite Gehäuseteil etwa durch Lösen von Schrauben etc. öffnen kann und dann den Sperrbolzen aus seiner Verriegelungsstellung drückt, schlägt die DE 197 13 318 C1 die Verwendung eines zusätzlichen Sicherungsbolzens vor. Dieser wird derart von dem Sperrbolzen angesteuert, daß er in der Verriegelungsstellung des Sperrbolzens die zweite Gehäusehälfte mit der ersten Gehäusehälfte von dem Gehäuseinneren aus (von außen nicht erkennbar) verbindet.

Nachteilig bei dieser bekannten Vorrichtung ist unter anderem, daß nach einem gewaltsamen Öffnen des Gehäuses, z.B. mit entsprechenden Spezialwerkzeugen, ein unbefugter Dritter den Sperrbolzen wiederum von seiner Ver- in seine Entriegelungsstellung verschieben kann.

Der Erfindung liegt die Aufgabe zugrunde, eine Vorrichtung der eingangs erwähnten

Art anzugeben, bei welcher eine Manipulation des Sperrbolzens auch dann ausgeschlossen ist, wenn das Gehäuse der Vorrichtung gewaltsam geöffnet wurde und der Sperrbolzen sich in seiner Verriegelungsstellung befindet.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, in einem Führungsteil des Sperrbolzens ein federbeaufschlagtes Sicherungselement anzuordnen, das durch ein an dem Gehäuse innenseitig befestigtes Verschlußelement in seiner Lage fixiert ist. Wird das Gehäuse durch einen unbefugten Dritten geöffnet, so wird mit dem entsprechenden Gehäusebereich auch das Verschlußelement entfernt und das Sicherungselement wird mindestens teilweise in eine Ausnehmung des Sperrbolzens verschoben und sichert diesen in seiner Verriegelungsstellung.

Als Sicherungselement kann sowohl ein durch eine Feder beaufschlagter Bolzen (Sicherungsbolzen) als auch eine Schenkelfeder verwendet werden, wobei der dem Verschlußelement zugewandte Schenkel die Funktion des Sicherungselementes übernimmt.

Bei einer vorteilhaften Ausführungsform der Erfindung ist die Ausnehmung des Sperrbolzens an dessen Rand angeordnet und derart ausgestaltet, daß in der Verriegelungsstellung des Sperrbolzens bei Entfernen des Gehäuseteiles eine Sicherung des Sperrbolzens durch Klemmung erfolgt. Eine derartige Anordnung der Ausnehmung des Sperrbolzens weist den Vorteil auf, daß die Ausnehmung leicht in den Sperrbolzen einbringbar und die Schwächung des Bolzens durch die Ausnehmung gering ist.

Das Verschlußelement wird vorzugsweise in dem Gehäusebereich angeordnet, von dem angenommen werden muß, daß ein unbefugter Dritter in diesem Bereich das Gehäuse gewaltsam öffnen wird. Dieses wird in der Regel der dem Innenraum des Fahrzeuges zugewandte Bereich sein. Denkbar ist auch, den entsprechenden Gehäusebereich außenseitig derart auszugestalten, daß ein unbefugter Dritter durch die Gestaltung veranlaßt wird, an diesem Bereich seine Werkzeuge zum Öffnen des Gehäuses anzusetzen.

Vorteilhaft ist es femer, wenn an dem Führungsteil des Sperrbolzens von außen nicht erkennbar ist, wo sich das Sicherungselement genau befindet, damit ein Unbefugter nicht durch Aufbohren des Führungsteiles das Sicherungsteil entfernen und anschließend den Sperrbolzen verschieben kann.

Weitere Einzelheiten und Vorteile der Erfindung ergeben sich aus den folgenden anhand von Figuren erläuterten Ausführungsbeispielen. Es zeigen:
Fig.1 den Längsschnitt durch eine erfindungsgemäße Vorrichtung mit einem in einem Führungsteil verschiebbaren Sperrbolzen, der sich in seiner Verriegelungsstellung befindet und durch einen querverschiebbaren Sicherungsbolzen sicherbar ist;
Fig.2 einen Schnitt entlang einer in Fig. 1 mit II-II bezeichneten Schnittlinie;
Fig.3 eine Seitenansicht auf den in seiner Verriegelungsstellung befindlichen Sperrbolzen einer zweiten erfindungsgemäßen Vorrichtung, wobei die Sicherung zwischen Sperrbolzen und Führungsteil durch Klemmung erfolgt, und
Fig.4 den Längsschnitt durch ein Führungsteil einer weiteren erfindungsgemäßen Vorrichtung, bei der als Sicherungselement eine Schenkelfeder verwendet wird.

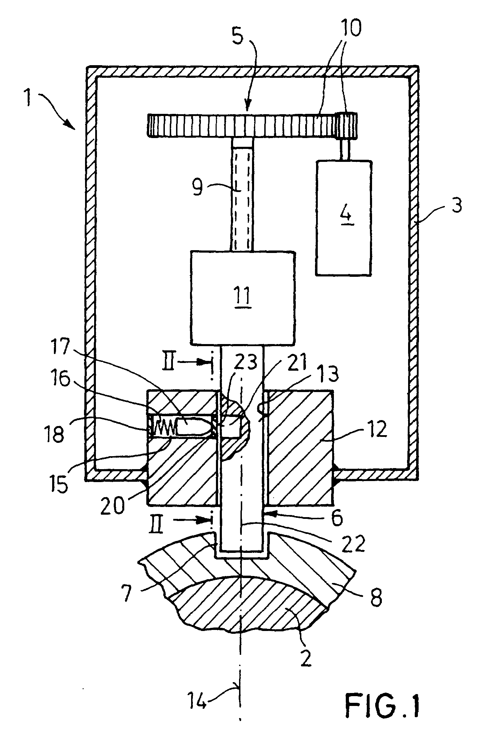

In Fig.1 ist mit 1 eine erfindungsgemäße Vorrichtung zur elektrischen Verriegelung einer Lenkspindel 2 einer Kraftfahrzeug-Lenkeinrichtung bezeichnet. Die Vorrichtung 1 umfaßt ein Gehäuse 3 sowie einen in dem Gehäuse 3 angeordneten Elektromotor 4 mit nachgeschaltetem Spindelantrieb 5 zur Verschiebung eines Sperrbolzens 6. Der Sperrbolzen 6 greift in seiner in Fig.1 dargestellten Verriegelungsstellung in eine nutenförmige Ausnehmung 7 eines an der Lenkspindel 2 befestigten Schließringes 8 ein.

Der Spindelantrieb 5 besteht aus einer Gewindespindel 9, die über ein Zahnradgetriebe 10 von dem Elektromotor 4 angetrieben wird, und einem in einer Führung gelagerten Mitnehmer 11 mit Innengewinde, welches in das Gewinde der Gewindespindel 9 eingreift.

Der Mitnehmer 11 weist auf seiner dem Sperrbolzen 6 zugewandten Seite eine nicht dargestellte Aufnahme auf, über die der Sperrbolzen 6 auf seiner der Lenkspindel 2 abgewandten Seite mit dem Mitnehmer 11 auswechselbar verbunden ist.

Außerdem umfaßt die Vorrichtung 1 zur Führung des vorderen Teiles 22 des Sperrbolzens 6 ein mit dem Gehäuse 3 und der Lenkeinrichtung des Fahrzeuges verbindbares Führungsteil 12, über welches die erfindungsgemäße Vorrichtung 1 an der Lenkeinrichtung befestigbar ist. Das Führungsteil 12 enthält zur formschlüssigen Führung des Sperrbolzens 6 eine Führungsausnehmung 13 und ist derart ausgebildet, daß es bei einem gewaltsamen Verdrehen der Lenkspindel 2 im verriegelten Zustand des Sperrbolzens 6 die auf dieses Teil einwirkenden Kräfte aufnimmt.

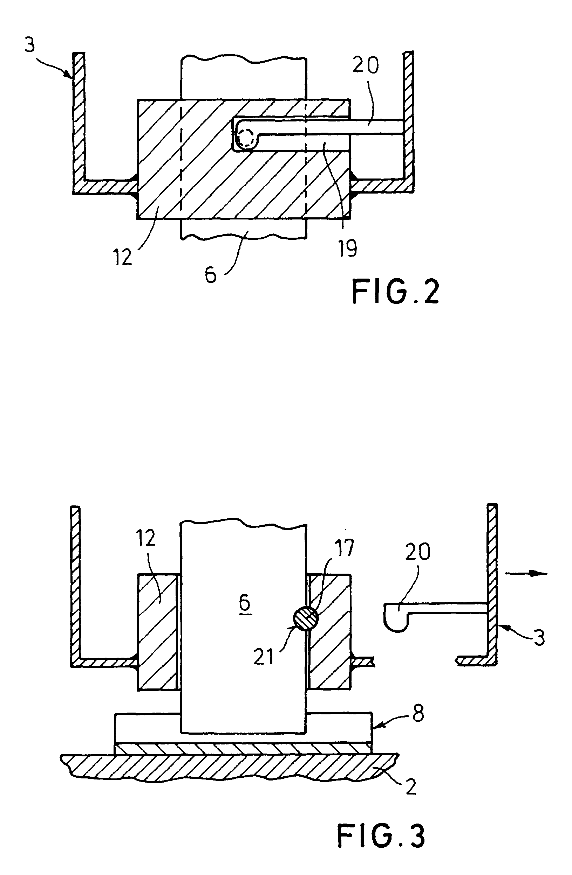

In dem Führungsteil 12 ist eine quer zur Längsachse 14 des Sperrbolzens 6 sich erstrekkende erste Ausnehmung 15 vorgesehen, die außenseitig verschlossen ist und innenseitig über eine erste Öffnung 23 in die Führungsausnehmung 13 mündet. In der ersten Ausnehmung 15 ist ein durch eine Druckfeder 16 beaufschlagter Sicherungsbolzen 17 längsverschiebbar angeordnet, wobei sich die Druckfeder 16 an der der Führungsausnehmung 13 abgewandten Außenwand 18 abstützt. Im Bereich der Führungsausnehmung 13 ist die erste Ausnehmung 15 durch ein an dem Gehäuse 3 innenseitig befestigtes und in einer zweiten Ausnehmung 19 des Führungsteiles 12 senkrecht zur ersten Ausnehmung 15 verschiebbares, relativ flaches leistenförmiges Verschlußelement 20 verschlossen (Fig.2). An diesem Verschlußelement 20 stützt sich der Sicherungsbolzen 17 gegen den Druck der vorgespannten Druckfeder 16 ab (Fig.1).

Außerdem befindet sich in dem Sperrbolzen 6 eine an den Sperrbolzen angepaßte Ausnehmung 21, die mit der ersten Ausnehmung 15 des Führungsteiles 12 fluchtet und damit der ersten Öffnung 23 gegenüberliegt. In dem Ausführungsbeispiel ist die Länge dieser Ausnehmung 21 kürzer gewählt als die Länge des Sicherungsbolzens 17.

Öffnet nun ein unbefugter Dritter gewaltsam das Gehäuse 3, so wird mit Entfernen der entsprechenden Gehäusewand, an der sich das Verschlußelement 20 befindet, auch dieses Element von der ersten Ausnehmung 15 des Führungsteiles 12 entfernt und der Sicherungsbolzen 17 wird durch die Druckfeder 16 in die Ausnehmung 21 des Sperrbolzens 6 hineingedrückt, so daß der Sicherungsbolzen 17 anschließend teilweise in dieser Ausnehmung 21 und teilweise in der ersten Ausnehmung 15 des Führungsteiles 12 formschlüssig gelagert ist. Der Sperrbolzen 6 und damit auch die Lenkspindel 2 bleiben in ihrer Verriegelungsstellung gesichert. Eine Verschiebung des Sperrbolzens 6 ist ohne größeren Aufwand nicht möglich.

Die Erfindung ist selbstverständlich nicht auf das vorstehend beschriebene Ausführungsbeispiel beschränkt. So können die Abmessungen des Sicherungsbolzens 17 und der Ausnehmung 21 des Sperrbolzens 6 derart gewählt werden, daß der Sicherungsbolzen 17 nach Entfernen des Verschlußelementes 20 durch den Sperrbolzen 6 hindurchragt und sich beidseitig vom Sperrbolzen 6 in entsprechenden Ausnehmungen des Führungsteiles 12 abstützt.

Als besonders vorteilhaft hat es sich erwiesen, wenn die Ausnehmung des Sperrbolzens nicht im mittleren Bereich, sondern am Rand des Sperrbolzens angeordnet und derart ausgestaltet ist, daß bei Entfernen des Verschlußelementes eine Sicherung des Sperrbolzens durch Klemmung erfolgt. Ein entsprechendes Ausführungsbeispiel ist in Fig.3 wiedergegeben, wobei der Fall dargestellt ist, daß das Verschlußelement 20 entfernt wurde. Dabei weist der wiederum mit 17 bezeichnete Sicherungsbolzen einen kreisförmigen Querschnitt auf und die mit 21 bezeichnete Ausnehmung des Sperrbolzens 6 besitzt eine halbkreisförmige Querschnittskontur.

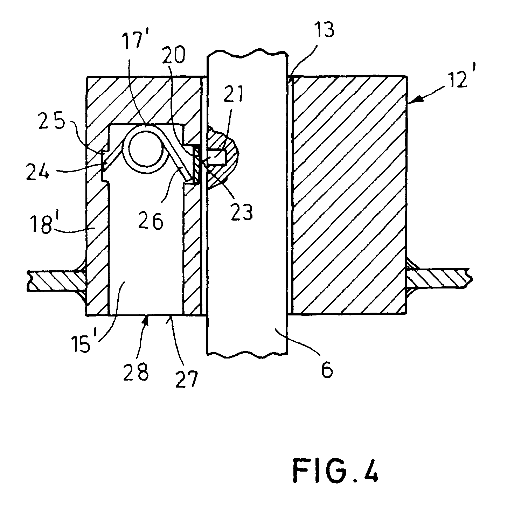

Schließlich muß das Sicherungselement nicht zwingend als Bolzen ausgebildet sein, sondern es kann sich bei diesem Element auch um eine Schenkelfeder handeln, so daß eine separate Feder nicht erforderlich ist. Ein entsprechendes Ausführungsbeispiel gibt Fig. 4 wieder. Dabei ist mit 12' ein Führungsteil bezeichnet, welches wiederum mit einer Führungsausnehmung 13 zur Führung des Sperrbolzens 6 versehen ist.

Das Führungsteil 12' weist eine erste Ausnehmung 15' auf, die sich parallel zur Führungsausnehmung 13 erstreckt und die auf ihrer der Führungsausnehmung 13 zugewandten Seite eine erste Öffnung 23 besitzt, welche durch ein Verschlußelement 20 verschlossen ist. In der Ausnehmung 15' ist eine vorgespannte Schenkelfeder 17' angeordnet, die sich mit ihrem ersten Schenkel 24 in einer in der Außenwand 18' des Führungsteiles 12' befindlichen Vertiefung 25 abstützt, damit sie nach ihrer Montage z.B. bei Fahrzeugbewegungen innerhalb der ersten Ausnehmung 15' nicht verrutschen kann. Mit ihrem zweiten Schenkel 26 stützt sich die Schenkelfeder 17' an dem Verschlußelement 20 ab.

Die erste Ausnehmung 15' weist auf ihrer unteren Stirnseite 27 eine zweite Öffnung 28 auf, durch die die Schenkelfeder 17' zur Montage auf einfache Weise in ihre bestimmungsgemäße Position in der Ausnehmung 15' geschoben werden kann.

Die Wirkungsweise der vorstehend beschriebenen Vorrichtung mit Schenkelfeder entspricht im wesentlichen derjenigen mit federbeaufschlagtem Sicherungsbolzen. Sofern das Verschlußelement 20 z.B. durch eine gewaltsame Zerstörung des Gehäuses der erfindungsgemäßen Vorrichtung entfernt oder verschoben wird, entspannt sich die Schenkelfeder 17' und der zweite Schenkel 26 wird in die Ausnehmung 21 des Sperrbolzens 6 verschwenkt. Eine Verschiebung des Sperrbolzens 6 wird dann durch den Schenkel 26 blockiert.

### Bezugszeichenliste

- 1: Vorrichtung
- 2: Lenkspindel
- 3: Gehäuse
- 4: Elektromotor
- 5: Spindelantrieb
- 6: Sperrbolzen
- 7: nutenförmige Ausnehmung
- 8: Schließring
- 9: Gewindespindel
- 10: Zahnradgetriebe
- 11: Mitnehmer
- 12,12': Führungsteil
- 13: Führungsausnehmung
- 14: Längsachse
- 15,15': erste Ausnehmung (Führungsteil)
- 16: Druckfeder
- 17: Sicherungselement, Sicherungsbolzen
- 17': Sicherungselement, Schenkelfeder
- 18,18': Außenwand
- 19: zweite Ausnehmung (Führungsteil)
- 20: Verschlußelement
- 21: Ausnehmung (Sperrbolzen)
- 22: vordere Teil (Sperrbolzen)
- 23: erste Öffnung
- 24: erste Schenkel
- 25: Vertiefung
- 26: zweiter Schenkel
- 27: Stirnseite
- 28: zweite Öffnung

## Patentansprüche

1. Vorrichtung zur Verriegelung der Lenkspindel (2) einer Lenkeinrichtung eines Fahrzeuges mit einem in einem Gehäuse (3) angeordneten und von einer Ent- in eine Verriegelungsstellung und umgekehrt verschiebbaren Sperrbolzen (6), mit den Merkmalen:
a) die Vorrichtung (1) umfaßt auf ihrer der Lenkspindel (2) zugewandten Seite ein Führungsteil (12;12') mit einer an den Sperrbolzen (6) formschlüssig angepaßten Führungsausnehmung (13), in welcher der vordere Teil (22) des Sperrbolzens (6) verschiebbar gelagert ist;
b) in dem Führungsteil (12;12') ist eine erste Ausnehmung (15;15') vorgesehen, die über eine erste Öffnung (23) in die Führungsausnehmung (13) mündet;
c) in dem Sperrbolzen (6) befindet sich eine Ausnehmung (21), die in der Verriegelungsstellung des Sperrbolzens (6) der ersten Öffnung (23) der ersten Ausnehmung (15;15') des Führungsteiles (12;12') gegenüberliegt;
d) in der ersten Ausnehmung (15;15') des Führungsteiles (12;12') ist ein federbeaufschlagtes Sicherungselement (17;17') angeordnet;
e) die erste Öffnung (23) der ersten Ausnehmung (15;15') des Führungsteiles (12;12') ist durch ein an dem Gehäuse (3) innenseitig befestigtes und in einer zweiten Ausnehmung (19) senkrecht zur ersten Ausnehmung (15;15') verschiebbares Verschlußelement (20) verschlossen, an dem sich das diesem Element zugewandte Ende des federbeaufschlagten Sicherungselementes (17;17') abstützt, so daß in der Verriegelungsstellung des Sperrbolzens (6) bei Entfernen des Gehäusebereiches, an dem das Verschlußelement (20) befestigt ist, das Sicherungselement (17;17') durch die auf das Sicherungselement (17;17') ausgeübte Federkraft in die Ausnehmung (21) des Sperrbolzen (6) geschoben wird und den Sperrbolzen (6) in seiner Verriegelungsstellung sichert.

2. Vorrichtung nach Anspruch 1, **dadurch gekennzeichnet, daß** die erste Ausnehmung (15) sich quer zur Längsachse (14) des Sperrbolzens (6) erstreckt und außenseitig verschlossen ist, und daß es sich bei dem Sicherungselement (17) um einen durch eine Druckfeder (16) beaufschlagten Sicherungsbolzen handelt, der in der ersten Ausnehmung (15) längsverschiebbar angeordnet ist, wobei sich die Druckfeder (16) an der der Führungsausnehmung (13) abgewandten Außenwand (18) der ersten Ausnehmung (15) abstützt.

3. Vorrichtung nach Anspruch 1, **dadurch gekennzeichnet, daß** es sich bei dem in der ersten Ausnehmung (15') befindlichen Sicherungselement (17') um eine Schenkelfeder handelt, deren erster Schenkel (24) sich an der der Führungsausnehmung (13) abgewandten Außenwand (18') der ersten Ausnehmung (15') abstützt und deren zweiter Schenkel (26) sich an dem verschiebbaren Verschlußelement (20) abstützt.

4. Vorrichtung nach Anspruch 3, **dadurch gekennzeichnet, daß** die erste Ausnehmung (15') sich mindestens teilweise parallel zur Führungsausnehmung (13) in dem Führungsteil (12') erstreckt und an einer der beiden Stirnseiten (27) des Führungsteiles (12') eine zweite Öffnung (28) aufweist, so daß die Schenkelfeder (17') durch die zweite Öffnung (28) in die erste Ausnehmung (15') einschiebbar ist.

5. Vorrichtung nach Anspruch 3 oder 4, **dadurch gekennzeichnet, daß** der erste Schenkel (24) der Schenkelfeder (17') sich in einer in der Außenwand (18') des Führungsteiles (12') befindlichen Vertiefung (25) abstützt.

6. Vorrichtung nach einem der Ansprüche 1 bis 5, **dadurch gekennzeichnet, daß** die Ausnehmung (21) des Sperrbolzens (6) an dessen Rand angeordnet und derart ausgestaltet ist, daß in der Verriegelungsstellung des Sperrbolzens (6) bei Entfernen des Verschlußelementes (20) eine Sicherung des Sperrbolzens (6) durch Klemmung erfolgt.

7. Vorrichtung nach Anspruch 6, **dadurch gekennzeichnet, daß** bei Verwendung eines Sicherungsbolzens (17) als Sicherungselement dieser einen kreisförmigen Querschnitt aufweist und daß die Ausnehmung (21) des Sperrbolzens (6) eine halbkreisförmige Querschnittskontur besitzt.

8. Vorrichtung nach einem der Ansprüche 1 bis 7, **dadurch gekennzeichnet, daß** das Verschlußelement (20) in dem Bereich des Gehäuses (3) befestigt ist, der in eingebantem Zustand dem Fahrzeuginnenraum zugewandt ist.

## Claims

1. A device for locking the steering shaft (2) of a steering mechanism of a vehicle having a locking pin (6) that is disposed in a housing (3) and is displaceable from an unlocking position into a locking position and vice versa, having the following features:
a) on its side closer to the steering shaft (2), the device (1) comprises a guide part (12; 12') having a guide recess (13), which is adapted in form-fit manner to the locking pin (6) and in which the front part (22) of the locking pin (6) is displaceably mounted;
b) in the guide part (12; 12') is provided a first recess (15; 15'), which opens via a first opening (23) into the guide recess (13);
c) in the locking pin (6) is situated a recess (21), which in the locking position of the locking pin (6) lies opposite the first opening (23) of the first recess (15; 15') of the guide part (12; 12');
d) a spring-loaded securing element (17; 17') is disposed in the first recess (15; 15') of the guide part (12; 12');
e) the first opening (23) of the first recess (15; 15') of the guide part (12; 12') is closed by a closure element (20), which is fixed to the inside of the housing (3) and is displaceable in a second recess (19) perpendicularly to the first recess (15; 15') and on which the end of the spring-loaded securing element (17; 17') that is closer to this element is supported, with the result that in the locking position of the locking pin (6), after the removal of the housing region to which the closure element (20) is fastened, the securing element (17; 17') is pushed by the spring force exerted on the securing element (17; 17') into the recess (21) of the locking pin (6) and secures the locking pin (6) in its locking position.

2. A device according to Claim 1,
**characterised in that** the first recess (15) extends transversely to the longitudinal axis (14) of the locking pin (6) and is closed on the outside,
and **in that** the securing element (17) is a securing pin loaded by a compression spring (16) and disposed with longitudinal displaceablity in the first recess (15), the compression spring (16) being supported on the outer wall (18) of the first recess (15) further from the guide recess (13).

3. A device according to Claim 1,
**characterised in that** the securing element (17') situated in the first recess (15') is a leg spring, the first leg (24) of which is supported on the outer wall (18') of the first recess (15') further from the guide recess (13) and the second leg (26) of which is supported on the displaceable closure element (20).

4. A device according to Claim 3,
**characterised in that** the first recess (15') extends at least to some extent parallel to the guide recess (13) in the guide part (12') and at one of the two end sides (27) of the guide part (12') comprises a second opening (28) so that the leg spring (17') can be inserted through the second opening (28) into the first recess (15').

5. A device according to Claim 3 or 4,
**characterised in that** the first leg (24) of the leg spring (17') is supported in a depression (25) situated in the outer wall (18') of the guide part (12').

6. A device according to one of Claims 1 to 5,
**characterised in that** the recess (21) of the locking pin (6) is disposed at its edge and is configured in such a manner that in the locking position of the locking pin (6) the locking pin (6) is secured by clamping when the closure element (20) is removed.

7. A device according to Claim 6,
**characterised in that** when a securing pin (17) is used as the securing element, said pin has a circular cross section and **in that** the recess (21) of the locking pin (6) has a semi-circular cross-sectional contour.

8. A device according to one of Claims 1 to 7,
**characterised in that** the closure element (20) is fixed in the region of the housing (3) which, in the installed state, is closer to the interior of the vehicle.

## Revendications

1. Dispositif pour le verrouillage de la colonne de direction (2) d'un système de direction d'un véhicule comportant un pêne de verrouillage (6) disposé dans un boîtier (3) et se déplaçant d'une position de déverrouillage vers une position de verrouillage et vice-versa,
**caractérisé en ce que** :
a) le dispositif (1) comprend, sur sa face tournée vers la colonne de direction, un élément de guidage (12 ; 12') présentant un évidement de guidage de forme complémentaire à celle du pêne de verrouillage (6) et dans lequel est logée coulissante la partie avant (22) du pêne de verrouillage (6) ;
b) dans l'élément de guidage, un premier évidement (15 ; 15') est prévu qui débouche dans l'évidement de guidage (13) par l'intermédiaire d'une première ouverture (23) ;
c) le pêne de verrouillage (6) comporte un évidement (21) qui, en position de verrouillage du pêne (6), est opposé à la première ouverture (23) du premier évidement (15 ; 15') de l'élément de guidage (12 ; 12') ;
d) dans le premier évidement (15 ; 15) de l'élément de guidage (12) ;12) est disposé un élément de blocage (17 ; 17') à ressort ;
e) la première ouverture (23) du premier évidement (15 ; 15) de l'élément de guidage (12 ; 12) est fermée par un élément de fermeture (20) fixé côté intérieur sur le boîtier (3) et se déplaçant dans un deuxième évidement (19) perpendiculairement au premier évidement (15 ; 15'), l'extrémité de l'élément de blocage (17 ; 17') tournée vers ledit élément de fermeture (20) prenant appui sur ce dernier, de sorte que, si la zone de boîtier sur laquelle est fixé l'élément de fermeture (20) est retirée, l'élément de blocage (17) ;17') se déplace vers l'évidement (21) du pêne de verrouillage (6) sous l'effet exercé par le ressort et bloque le pêne (6) dans sa position de verrouillage.

2. Dispositif selon la revendication 1, **caractérisé en ce que** le premier évidement (15) s'étend transversalement à l'axe longitudinal (14) du pêne de verrouillage (6) et qu'il est fermé extérieurement et que l'élément de blocage (17) est une goupille de blocage, soumise à l'effet d'un ressort de pression (16), se déplaçant dans le sens longitudinal dans le premier évidement (15), sachant que le ressort de pression (16) prend appui sur la paroi extérieure (18) du premier évidement (15) opposée à l'évidement de guidage (13).

3. Dispositif selon la revendication 1, **caractérisé en ce que** l'élément de blocage (17') situé dans le premier évidement (15') est un ressort à branches dont la première branche (24) prend appui sur la paroi extérieure (18') du premier évidement (15') opposée à l'évidement de guidage (13) et dont la deuxième branche (26) prend appui sur l'élément de fermeture (20) coulissant.

4. Dispositif selon la revendication 3, **caractérisé en ce que** le premier évidement (15') s'étend au moins partiellement parallèlement à l'évidement de guidage (13) dans l'élément de guidage (12') et que l'une de deux extrémités (27) de l'élément de guidage (12') comporte une deuxième ouverture (28) de manière à permettre l'introduction du ressort à branches (17') dans le premier évidement (15) au travers de cette deuxième ouverture (28).

5. Dispositif selon la revendication 3 ou 4, **caractérisé en ce que** la première branche (24) du ressort à branches (17') prend appui dans un creux (25) ménagé dans la paroi extérieure (18') de l'élément de guidage (12').

6. Dispositif selon l'une des revendications 1 à 5, **caractérisé en ce que** l'évidement (21) du pêne de verrouillage (6) est agencé sur le bord de ce dernier et réalisé de manière qu'en position de verrouillage du pêne de verrouillage (6), ce dernier soit bloqué par serrage au moment du retrait de l'élément de fermeture (20).

7. Dispositif selon la revendication 6, **caractérisé en ce que** dans le cas d'une utilisation d'une goupille de blocage (17) comme élément de blocage, celle-ci présente une section circulaire et que l'évidement (21) du pêne de verrouillage (6) possède un contour de section demi-circulaire.

8. Dispositif selon l'une des revendications 1 à 7, **caractérisé en ce que** l'élément de fermeture (20) est fixé dans la zone du boîtier (3) qui, à l'état monté, est tournée vers l'habitacle du véhicule.
